# EUROPÄISCHE PATENTSCHRIFT

(11) **EP 1 495 097 B1**
(45) Veröffentlichungstag und Bekanntmachung des Hinweises auf die Patenterteilung: **30.05.2007**
(21) Anmeldenummer: 03746303.1
(22) Anmeldetag: 16.04.2003
(51) Int. Cl.: C10L 5/44

(54) **BRENNSTOFF IN FORM VON PRESSLINGEN MIT GEHALT AN PFLANZENMATERIAL UND EIN VERFAHREN ZUR HERSTELLUNG EINES SOLCHEN BRENNSTOFFES**
COMBUSTIBLE IN THE FORM OF COMPRESSED ELEMENTS CONTAINING PLANT MATERIAL AND METHOD FOR THE PRODUCTION OF SUCH A COMBUSTIBLE
COMBUSTIBLE SOUS FORME DE PRODUIT COMPRIME CONSTITUE DE MATIERE VEGETALE ET PROCEDE POUR PRODUIRE UN COMBUSTIBLE DE CE TYPE

(30) Priorität: 17.04.2002 AT 5912002
(43) Veröffentlichungstag der Anmeldung: 12.01.2005
(73) Patentinhaber: Entwicklung und Herstellung von Produkten aus nachwachsenden Rohstoffen mit Mikroorganismen Technologie Kleedorfer ..., 1070 Wien (AT)
(72) Erfinder: KLEEDORFER, Thomas, A-1070 Wien (AT); VIDENSKY, Felix, A-3543 Krumau am Kamp (AT)
(74) Vertreter: Puchberger, Peter
(86) Internationale Anmeldenummer: PCT/EP2003/003966
(87) Internationale Veröffentlichungsnummer: WO 2003/087275

(56) Entgegenhaltungen:
- WO-A-93/21287
- DE-A- 4 213 829
- FR-A- 953 091
- FR-A- 2 150 245

## Beschreibung

Die Erfindung betrifft einen Brennstoff in Form von Presslingen mit Gehalt an Pflanzenmaterial und ein Verfahren zur Herstellung eines solchen Brennstoffes.

Insbesondere soll der so hergestellte Brennstoff zum Grillen für die Zubereitung von Speisen geeignet sein, wobei bekanntlich die Beschaffenheit des Brennstoffs und dessen Brandverhalten einen erheblichen Einfluß auf die Qualität der zubereiteten Speisen haben. Weiters soll mit der Erfindung ein Weg gefunden werden, für die in großen Mengen anfallenden pflanzlichen Bestandteile wie Stroh, Hartholzpartikel oder Kokosnußschalen, eine wirtschaftlich sinnvolle Verwendung zu finden.

Bei Brennstoffen zum Grillen über der offenen Flamme oder Glut kommt noch hinzu, dass der Brennstoff und seine Brenngase lebensmitteltechnologisch unbedenklich sein muß. Überdies soll gewährleistet sein, dass es zu keiner Verfälschung des Geschmacks oder Geruchs des Grillgutes kommt, oder dass bevorzugt eine geschmacklich gute Würzung eintritt. Weiters soll der Brennstoff leicht handhabbar und sicher sein. Zur Handhabbarkeit gehört die leichte Anzündbarkeit des Brennstoffes. Im Brandverhalten ist es insbesondere für Grillzwecke erwünscht, die beim Abbrand des Brennstoffs erzeugte Hitze zu speichern, sodass es in der nachgeschalteten Glutphase zu einer gleichmässigen und möglichst langen Abgabe der Grillhitze kommt. Der Brennstoff soll aber ebenso vorteilhaft für Heizzwecke verwendbar sein.

Das Dokument FR-A-2 150 245 offenbart ein Brennstoff in Form von Granulaten, mit Gehalt an von Mikroorganismen aufgeschlossenem Pflanzen-material, welche zusätzlich zu Hausmüll Stroh, oder Strohbestandteilen und zerkleinertem Hartholz enthaltet, wobei der Müll, zusammen mit das Pflanzen-material, vor dem Herstellen der Granulatform, von Mikroorganismen aufgeschlossen sind.

Der erfindungsgemässe Brennstoff ist dadurch gekennzeichnet, dass er im Wesentlichen aus:
a) Stroh oder Strohbestandteilen und
b) zerkleinertem Hartholz und/oder Kokosnußschalen
besteht, wobei sowohl das Stroh oder die Strohbestandteile als auch das Hartholz oder Kokosnußschalen von Mikroorganismen aufgeschlossen sind.
Ein weiteres Merkmal ist es, dass der Brennstoff bindemittelfrei ist. Weitere vorteilhafte Merkmale des Brennstoffs sind den Patentansprüchen und der nachfolgenden Beschreibung und den Zeichnungen zu entnehmen.

Das erfindungsgemässe Verfahren zur Herstellung des Brennstoffpresslings ist dadurch gekennzeichnet, dass das Stroh oder Strohbestandteile und das zerkleinerte Hartholz und/oder Kokosnußschalen mit einer Mikroorganismensuspension befeuchtet und etwa 2 bis 4 Wochen fermentieren gelassen wird, wobei die Fermentation des Strohbestandteils aerob oder anaerob erfolgt und die Fermentation der Hartholzpartikel oder Kokosnußschalenpartikel anaerob durchgeführt wird und dass die fermentierten Bestandteile, nötigenfalls zerkleinert, gegebenenfalls unter Zusatz eines Anteils anorganischer Stoffe wie Kalksteingranulat, vermischt und getrocknet und dann unter Druck von vorzugsweise 700 bis 900 kg/cm² zu Presslingen verpresst wird. Nach einem weiteren Kennzeichen des Verfahrens wird bevorzug der Pressling durch Tauchen oder Besprühen mit einem wasserabweisenden, rückstandslos verbrennenden Überzug wie Stearin beschichtet.

Nachfolgend wird die Erfindung anhand der Zeichnungen in mehreren Ausführungsvarianten beschrieben. Figur 1 zeigt in Schrägansicht eine Ausführungsform des Brennstoffs und die Figuren 2 und 3 den Pressling und die Zündhilfe getrennt vom Pressling. Figur 4 zeigt in Schrägansicht eine weitere Ausführungsform des Brennstoffs. Figur 5 zeigt im Schnitt eine dritte Ausführungsform des Brennstoffs im Radialschnitt.

Im Wesentlichen besteht der Brennstoff aus einem Pressling mit Gehalt an Pflanzenmaterial, welches aus zwei Bestandteilen zusammengesetzt ist:
a) Stroh oder Strohbestandteile
b) zerkleinertes Hartholz und/oder Kokosnußschalen.

Sowohl das Stroh- oder die Strohbestandteile als auch die Hartholzteilchen oder Kokosnußschalenteilchen werden vor dem Verpressen durch Fermentation aufgeschlossen.

Das Stroh kann praktisch jede Art Stroh sein. In Hinblick auf die zur Verarbeitung erforderliche Menge empfiehlt sich insbesondere Hanfstroh, Leinenstroh, Roggenstroh, Reisstroh und Gerstenstroh. Das Stroh wird bevorzugt auf eine Teilchengröße von 0,5 bis 2,0 cm zerteilt. Das Stroh kann entweder so verarbeitet werden, wie es natürlich vorkommt, oder es kann auch die sogenannte Strohschäbe verwendet werden, also der von den Faseranteil befreite Rest des Strohs. Letztere entsteht zum Beispiel bei jenen Stroharten, wo der Faseranteil einen bevorzugten Rohstoff darstellt und die Strohschäbe ein billiges Abfallprodukt darstellt.

Die Hartholz- oder Kokosnußschalenteilchen weisen bevorzugt eine Größe von etwa 0,5 bis 0,7 cm auf und sind ebenfalls Abfallprodukte, die kostengünstig zur Verfügung stehen.

Die Hartholzteilchen können bevorzugt aus Buche, Eiche, Ahorn, Birke, Kirsche, Zwetschge oder Eukalyptus bei der Holzverarbeitung anfallen. Bei den Stroharten zeigt sich Hanfstroh durch seinen hohen Brennwert und sein Brennverhalten für die erfindungsgemässen Zwecke besonders aus. Zur Erzeugung des Strohrohstoffes kann entweder ungebrochenes Stroh oder Abfälle aus dem Brechen des Strohs verwendet werden.

Die genannten pflanzlichen Rohstoffe werden erfindungsgemäss in fermentierter Form verwendet. Durch die Fermentation kommt es zu einem vorteilhaften Aufschluss der Bestandteile der genannten Pflanzenmaterialien, was sich vorteilhaft auf das Brandverhalten des Brennstoffs und auf die Aromaentwicklung beim Abbrand auswirkt.

Zur Fermentation können Fermentationsmittel eingesetzt werden, wie sie z.B. im Handel zur Kompostierhilfe oder als Leistungsförderer im Tiemahrungsbereich eingesetzt werden. Im Wesentlichen handelt es sich dabei um ein Gemisch aus Mikroorganismen und Fermenten, die die im Pflanzenmaterial enthaltene Zellulose aufschließen. Die für die vorliegende Erfindung versuchsweise verwendeten Fermentationshilfen sind z. B. im Handel unter der Bezeichnung EM-1 der Firma Mulitkraft Futtermittel Ges. m.b.H. erhältlich.

Die Fermentation des Strohs oder der Strohbestandteile kann aerob durchgeführt werden, beispielsweise auch frei am Feld. Zur Vorbereitung der Fermentlösung wurde das Mittel in 3 % wässriger Lösung gelöst, auf 3 % Rohrzucker zugesetzt und weiters 1 % Melasse (Rüben- oder Rohrmelasse) hinzugefügt. Nach einer Erhitzung auf etwa 65°C wurde die Lösung für zwei Wochen bei etwa 35°C inkubiert, sodass es zu einer entsprechenden Vermehrung der Mikroorganismen kommt. Die Mikroorganismen umfassen eine Mischung aus Milchsäurebakterien, Hefen, Photosynthesebakterien, Actinomyceten und andere Pilze.

Die so erhaltene Kulturlösung wurde für die aerobe Anwendung auf das Strohmaterial in einer Verdünnung von 1 zu 100 mit Wasser mehrfach aufgetragen. Nach einer Einwirkungszeit von etwa 2 bis 4 Wochen war der Fermentationsprozess abgeschlossen. Die Fermentation des Strohs kann auch anaerob in einem Silo stattfinden.

Für die Fermentation der Holzpartikel oder der Kokosnußschalenteilchen wird die Fermentation bevorzugt in einem Silo anaerob durchgeführt. Hier beträgt die Fermentationsdauer ebenfalls bis zu 4 Wochen. Die Fermentationslösung kann hierbei höher dosiert sein, z.B. mit einer Verdünnung von 1 zu 50 aus dem zuvor erhaltenen Kultursubstrat.

Die fermentierten Rohprodukte werden getrocknet, eventuell zerkleinert, im gewünschten Verhältnis z.B 70 Gew.% Stroh und 30 Gew.% Kokosschalen gemischt und dann mit einem Pressdruck zwischen 700 und 900 kg/cm² zu den gewünschten Presslingen gepresst. Bevorzugt wird eine Endlospresse verwendet, bei der der genannte hohe Pressdruck mit Stossimpulsen (z.B. 200 Impule / Min. erzeugt wird. Am Ausgang der Endlospresse werden die entsprechenden Stücke vom Preßstrang abgeschnitten. Typischerweise sind die einzelnen Presslinge runde Scheiben oder Ringe mit einem Durchmesser von beispielsweise 10 cm und einer Scheibendicke von 4 cm. Durch den hohen Druck wird ein stabiler Pressling erzeugt, der mechanisch fest ist.

Die Presslinge werden sodann mit einem wasserabweisenden, rückstandslos verbrennenden Überzug beschichtet. Bevorzugt wird Stearin verwendet, da dieses vollständig verbrennt und keinerlei geschmackliche oder geruchsmässige Veränderung hervorruft.

Der Pressling wird bevorzugt mit einem Loch versehen, um sowohl das Anzünden als auch den Abbrand zu erleichtern. Im Falle von Scheiben wird somit ein ringförmiger Pressling erzeugt, der ein zentrales Loch aufweist. Die Anordnung des Loches kann aber auch außermittig liegen.

Bevorzugt wird der Pressling mit einer Zündhilfe versehen. Die Zündhilfe ist bevorzugt so ausgebildet, dass es zu einer vollständigen Verbrennung ohne geschmackliche oder geruchsmässige Beeinträchtigung kommt. Eine bevorzugte Zündhilfe besteht aus Stearin als Bindemittel und leicht entzündlichem Brennstoff wie Strohbestandteilen oder Holzmehl. Eine aus diesen Bestandteilen gebildete Paste kann heiß auf eine der Flächen des Presslings aufgetragen werden. Eine andere Alternative liegt darin, die Zündhilfe in das Loch des Presslings einzusetzen. Bevorzugt wird dabei die Zündhilfe ebenfalls ringförmig vorgesehen, sodass auch für das Anzünden im Brennstoff ein Loch verbleibt, wodurch der Anbrand wesentlich erleichtert wird.

Das Loch in der Mitte des Presslings hat bevorzugt einen Durchmesser von 2 bis 3 cm. Beim Auffüllen des Loches mit einem gelochten Zündmittel verbleibt etwa ein freier Lochdurchmesser von 1 bis 2 cm. Zum Anzünden kann das Zündmittel auch mit einem Docht versehen werden.

Bei den Rohstoffen kann das Verhältnis zwischen Strohbestandteil und Hartholz- oder Kokosnußschalenbestandteil entsprechend gewählt werden. Ein Beispiel für das Mischungsverhältnis ist z.B. 70% Stroh und 30% Hartholz und/oder Kokosnußschale.

Eine Ausführungsvariante des Zündmittels besteht zu 25 % aus Hanffasern und zu 75% aus Hanfschäbe. Der Docht kann aus gedrehten Hanffasern bestehen und eine Dicke von 2 bis 3 mm aufweisen. Dies sind jedoch beispielhafte Angaben.

Gemäss einem weiteren bevorzugten Ausführungsbeispiel wird dem fermentierten Material des Presslings als Zuschlagsstoff ein anorganisches Material zugesetzt. Bevorzugt ist dies ein Kalksteingranulat. Der Kalkstein hat den Vorteil, die beim Abbrand des Brennstoffs entstehende Hitze zu speichern, ohne dabei zu zerspringen. Die gespeicherte Wärme führt zu einem verlängerten Glühverhalten und einer gleichmässigen Hitzeabgabe an das Grillgut oder an die Umgebung.

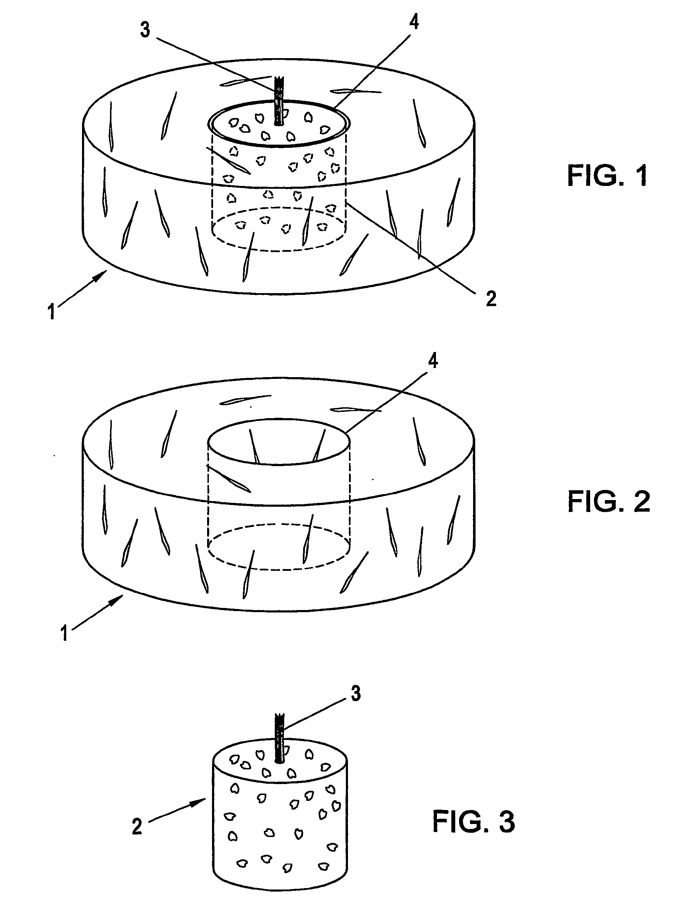

Die Figuren 1 bis 3 zeigen eine erste Ausführungsvariante. Der Pressling 1 ist ringförmig ausgebildet und weist ein zentrales Loch 4 auf, welches den Pressling vollständig durchragt. In diesem Loch 4 sitzt die Zündhilfe 2 mit dem Docht 3. Diese Zündhilfe besteht aus gepressten Strohbestandteilen und z.B. Hanffasem.

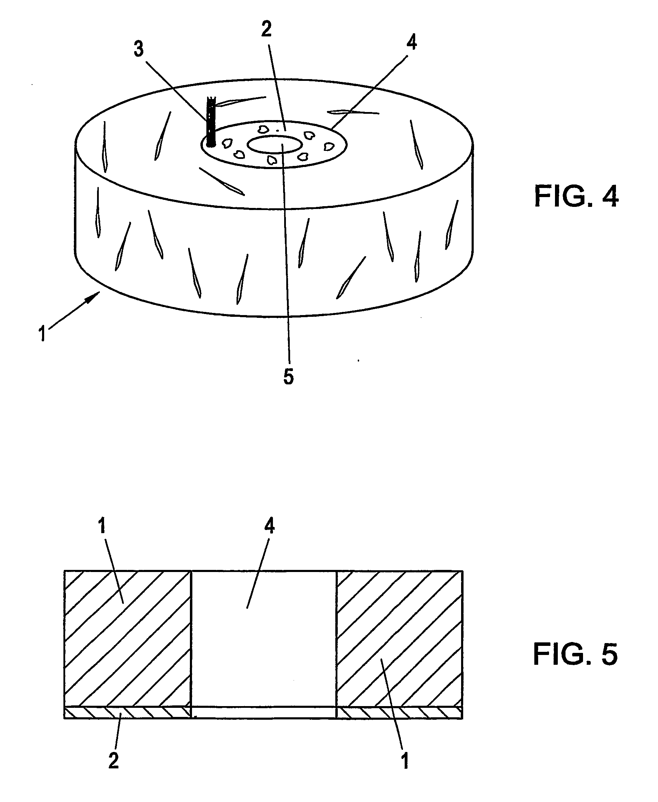

Bei der Ausführungsvariante nach Figur 4 ist die Zündhilfe 2 ebenfalls im Loch 4 angeordnet, weist aber innen das zuvor beschriebene Loch 5 auf. Der Docht 3 kann auch hier vorgesehen werden, was jedoch nicht unbedingt notwendig ist. Diese Zündhilfe besteht z.B. aus mit Stearin gebundenem Holzstaub, wie oben beschrieben.

Bei der Herstellung unterscheiden sich die beiden Varianten dadurch, dass bei dem Brennstoff nach den Figuren 1 bis 3 die Zündhilfe nachträglich als Fertigteil eingesetzt wird. Bei der Variante nach Figur 4 wird die Zündhilfe 2 in pastöser Form eingespritzt, wobei das Loch 5 durch einen entsprechenden Dorn erzeugt wird.

Die Figur 5 zeigt im Querschnitt eine dritte Variante des Brennstoffs, wobei zur Illustration gezeigt ist, dass die Zündhilfe 2 auch anders angeordnet sein kann, hier als Schicht von etwa 2 bis 3 mm Dicke auf einer der Flachseiten des Presslings 1.

## Patentansprüche

1. Brennstoff in Form von Presslingen mit Gehalt an von Mikroorganismen aufgeschlossenem Pflanzenmaterial, **dadurch gekennzeichnet, dass** der Brennstoff im Wesentlichen aus
(a) Stroh oder Strohbestandteilen und
(b) zerkleinertem Hartholz und/oder Kokosnussschalen
besteht, wobei sowohl das Stroh oder die Strohbestandteile als auch das Hartholz oder Kokosnussschalen vor dem Verpressen zum Pressling von Mikroorganismen aufgeschlossen sind.

2. Brennstoff nach Anspruch 1, **dadurch gekennzeichnet, dass** er bindemittelfrei ist.

3. Brennstoff nach Anspruch 1 oder 2, **dadurch gekennzeichnet, dass** das Stroh ausgewählt ist aus der Gruppe Hanfstroh, Leinenstroh und Roggenstroh, Reisstroh, Gerstenstroh oder den von den Faseranteilen befreiten Bestandteilen dieser Stroharten (Strohschäbe).

4. Brennstoff nach einem der Ansprüche 1 bis 3, **dadurch gekennzeichnet, dass** das Stroh oder die Strohbestandteile eine Teilchengröße von vorzugsweise 0,5 bis 2,0 cm und die Hartholz- oder Kokosnussschalenteilchen eine Größe von etwa 0,5 bis 0,7 cm aufweisen.

5. Brennstoff nach einem der Ansprüche 1 bis 4, **dadurch gekennzeichnet, dass** die zum Aufschließen (Fermentieren) verwendeten Mikroorganismen eine Mischung von Milchsäurebakterien, Hefen, Photosynthese-Bakterien, Actinomyceten und Pilzen umfassen.

6. Brennstoff nach einem der Ansprüche 1 bis 5, **dadurch gekennzeichnet, dass** der Brennstoffpressling (1) ein Loch (4) aufweist und bevorzugt in Ringform gepresst ist

7. Brennstoff nach Anspruch 6, **dadurch gekennzeichnet, dass** eine Zündhilfe (2) im Loch (4) angeordnet ist und gegebenenfalls ein Loch (5) aufweist.

8. Brennstoff nach einem der Ansprüche 1 bis 6, **dadurch gekennzeichnet, dass** eine Zündhilfe (2) an einer der Flachseiten des Presslings (1) angeordnet ist.

9. Brennstoff nach einem der Ansprüche 1 bis 8, **dadurch gekennzeichnet, dass** der Pressling außen mit einem wasserabweisenden, rückstandslos verbrennenden Überzug, bevorzugt Stearin, beschichtet ist.

10. Brennstoff nach einem der Ansprüche 1 bis 9, **dadurch gekennzeichnet, dass** die Zündhilfe aus einem brennbaren Gemisch pflanzlicher Späne oder Staub und einem rückstandslos verbrennenden Bindemittel wie Stearin besteht.

11. Brennstoff nach einem der Ansprüche 1 bis 10, **dadurch gekennzeichnet, dass** dem Pressling zusätzlich ein Anteil anorganischer Stoffe, bevorzugt Kalksteingranulat, beigemengt ist.

12. Verfahren zur Herstellung des Brennstoffpresslings nach einem der Ansprüche 1 bis 11, **dadurch gekennzeichnet, dass** das Stroh oder Strohbestandteile und das zerkleinerte Hartholz und/oder Kokosnussschalen mit einer Mikroorganismensuspension befeuchtet und etwa 2 bis 4 Wochen fermentieren gelassen wird, wobei die Fermentation des Strohbestandteils aerob oder anaerob erfolgt und die Fermentation der Hartholzpartikel oder Kokosnussschalenpartikel anaerob durchgeführt wird und dass die fermentierten Bestandteile, nötigenfalls zerkleinert, gegebenenfalls unter Zusatz eines Anteils anorganischer Stoffe, wie Kalksteingranulat, vermischt und getrocknet und dann unter Druck von vorzugsweise 700 bis 900 kg/cm² zu Presslingen verpresst wird.

13. Verfahren nach Anspruch 12, **dadurch gekennzeichnet, dass** die Presslinge durch Tauchen oder Besprühen mit einem wasserabweisenden, rückstandslos verbrennenden Überzug wie Stearin beschichtet werden.

## Claims

1. Combustible in the form of compressed elements containing plant material decomposed by micro-organisms, **characterized in that** said combustible consists substantially of
a) straw or straw components and
b) reduced size hardwood and/or coconut shells, wherein both the straw or straw components and the hardwood or coconut shells, before being pressed into the compressed element, are decomposed by means of micro-organisms.

2. Combustible according to claim 1, **characterized in that** it is free of bonding agent.

3. Combustible according to claim 1 or 2, **characterized in that** the straw is selected from the group comprising: hemp straw, linen straw and rye straw, rice straw, barley straw or the component parts of these types of straw (straw shavings) split from the fibre portions.

4. Combustible according to any one of claims 1 to 3, **characterized in that** the straw or the straw components have a particle size of preferably 0.5 to 2.0 cm and the hardwood or coconut shell particles have a size of approximately 0.5 to 0.7 cm.

5. Combustible according to any one of claims 1 to 4, **characterized in that** the micro- organisms used for digesting (fermenting) comprise a mixture of lactic acid bacteria, yeast, photosynthesis bacteria, actinomycetes and fungi.

6. Combustible according to any one of claims 1 to 5, **characterized in that** the combustible compressed element (1) has a hole (4) and preferably is pressed in ring form.

7. Combustible according to claim 6, **characterized in that** an ignition aid (2) is arranged in the hole (4) and possibly has a hole (5).

8. Combustible according to any one of claims 1 to 6, **characterized in that** an ignition aid (2) is arranged on one of the flat sides of the compressed element (1).

9. Combustible according to any one of claims 1 to 8, **characterized in that** the compressed element is coated on the outside with a water-repellent coating which burns without residue, preferably stearin.

10. Combustible according to any one of claims 1 to 9, **characterized in that** the ignition aid consists of an inflammable mixture of vegetable chaff or dust and a binding agent which burns without residue, such as stearin.

11. Combustible according to any one of claims 1 to 10, **characterized in that** the compressed element is additionally mixed with a portion of inorganic material, preferably granulated limestone.

12. Method for the production of the combustible compressed element according to any one of claims 1 to 11, **characterized in that** the straw or straw components and the reduced size hardwood and/or coconut shells is(are) moistened with a micro-organism suspension and left to ferment for about 2 to 4 weeks, wherein the fermentation of the straw component takes place aerobically or anaerobically and the fermentation of the hardwood particles or coconut shell particles is carried out anaerobically and **in that** the fermented components, if necessary reduced in size, are mixed and dried possibly with addition of a portion of inorganic material such as granulated limestone, and then pressed to compressed elements at a pressure of preferably 700 to 900 kg/cm².

13. Method according to claim 12, **characterized in that** the compressed elements are coated by dipping or spraying with a water-repellent coating which burns without residue, such as stearin.

## Revendications

1. Combustible sous forme de comprimés, contenant une certaine quantité de matières végétales décomposées par des microorganismes, **caractérisé en ce que** ce combustible est constitué, pour l'essentiel :
a) de paille ou de composants de paille,
b) et de bois dur et/ou de coques de noix de coco, réduits en petits morceaux,
tant la paille ou les composants de paille que le bois dur et les coques de noix de coco étant décomposées par des microorganismes avant leur compression en comprimés.

2. Combustible conforme à la revendication 1, **caractérisé en ce qu'**il ne contient pas de liant.

3. Combustible conforme à la revendication 1 ou 2, **caractérisé en ce que** la paille est choisie parmi de la paille de chanvre, de la paille de lin, de la paille de seigle, de la paille de riz, de la paille d'orge, et les composants de ces types de paille restant après élimination de leurs parties fibreuses (produits de hachage).

4. Combustible conforme à l'une des revendications 1 à 3, **caractérisé en ce que** les fragments de paille ou de composants de paille ont de préférence une taille de 0,5 à 2,0 cm et les morceaux de bois dur ou de coques de noix de coco ont une taille d'ennviron 0,5 à 0,7 cm.

5. Combustible conforme à l'une des revendications 1 à 4, **caractérisé en ce que** les microorganismes employés pour la décomposition (fermentation) comprennent un mélange de bactéries lactiques, de levures, de bactéries photosynthétiques, d'actinomycètes et de champignons.

6. Combustible conforme à l'une des revendications 1 à 5, **caractérisé en ce que** le comprimé (1) de combustible est percé d'un trou (4) et présente de préférence une forme annulaire.

7. Combustible conforme à la revendication 6, **caractérisé en ce qu'**il y a, disposée dans le trou (4), une amorce (2) qui est éventuellement percée d'un trou (5).

8. Combustible conforme à l'une des revendications 1 à 6, **caractérisé en ce qu'**il y a une amorce (2) disposée sur l'une des faces planes du comprimé (1).

9. Combustible conforme à l'une des revendications 1 à 8, **caractérisé en ce que** le comprimé est revêtu, sur ses faces externes, d'une couche de matériau hydrofuge qui brûle sans laisser de résidus, et de préférence, d'une couche de stéarine.

10. Combustible conforme à l'une des revendications 1 à 9, **caractérisé en ce que** l'amorce est constituée d'un mélange combustible de matières végétales réduites en copeaux ou en poudre et d'un liant qui brûle sans laisser de résidus, comme de la stéarine.

11. Combustible conforme à l'une des revendications 1 à 10, **caractérisé en ce qu'**il comprend en outre, mélangée aux comprimés, une fraction de matériau minéral, de préférence un granulat de calcaire.

12. Procédé de fabrication d'un combustible conforme à l'une des revendications 1 à 11, **caractérisé en ce qu'**on humecte de la paille ou des composants de paille et des petits morceaux de bois dur et/ou de coques de noix de coco avec une suspension de microorganismes et on laisse le tout fermenter à peu près 2 à 4 semaines, la fermentation de la fraction paille s'effectuant en mode aérobie ou anaérobie et la fermentation des petits morceaux de bois dur et/ou de coques de noix de coco s'effectuant en mode anaérobie, et **en ce qu'**on mélange les composants fermentés, si nécessaire réduits en petits morceaux, en y ajoutant éventuellement une fraction de matériau minéral, comme un granulat de calcaire, on fait sécher le mélange et on le comprime, de préférence sous une pression de 700 à 900 kg/cm², pour en faire des comprimés.

13. Procédé conforme à la revendication 12, **caractérisé en ce que** l'on revêt les comprimés, par immersion ou pulvérisation, d'une couche de matériau hydrofuge qui brûle sans laisser de résidus, comme de la stéarine.
